# FASCICULE DE BREVET EUROPEEN

(11) **EP 0 612 561 B1**
(45) Date de publication et mention de la délivrance du brevet: **26.08.1998**
(21) Numéro de dépôt: 94400325.0
(22) Date de dépôt: 14.02.1994
(51) Int. Cl.: B01J 8/16, B01J 20/34, B01J 23/90

(54) **Traitement thermique de particules solides de catalyseurs ou d'adsorbants en présence de fluide dans une spire hélicoidale vibrante**
Thermische Behandlung von festen Katalysator- oder Adsorbentpartikeln in Gegenwart eines Fluidums in ein Vibratorgerät mit Spiralwindungen
Thermal treatment of solid catalyst or adsorbent particles in presence of a fluid in an helicoidal vibrating coil

(30) Priorité: 26.02.1993 FR 9302366
(43) Date de publication de la demande: 31.08.1994
(73) Titulaire: EURECAT EUROPEENNE DE RETRAITEMENT DE CATALYSEURS, F-07800 La Voulte-sur-Rhône (FR)
(72) Inventeur: Mitzkat, Martin, F-26000 Valence (FR); Dufresne, Pierre, F-26000 Valence (FR); Ackermann, François, F-07800 La Voulte sur Rhone (FR)
(74) Mandataire: Andreeff, François

(56) Documents cités:
- FR-A- 2 258 895
- FR-A- 2 311 583
- FR-A- 2 634 187

## Description

La présente invention concerne un procédé servant au traitement de particules solides qui consiste à faire monter lesdites particules dans au moins une spire hélicoïdale vibrante, à les soumettre sur la majeure partie de leur trajet à un profil de température et à les mettre en contact avec au moins un fluide sur au moins une partie de leur trajet. La présente invention peut s'appliquer aux particules solides catalytiques et/ou adsorbantes.

La présente invention concerne aussi l'appareil de mise en oeuvre du procédé.

L'utilisation d'appareil élévateur vibrant comportant une rampe hélicoïdale est bien connu de l'art antérieur dans le but de faire monter des produits du type granulé, extrudé, pastille. Un tel appareil permet notamment aussi d'obtenir la séparation de produits granulés, d'une part en produits de plus grande dimension qui remontent à l'intérieur de la couche de produit granulé et d'autre part en produits de plus petite dimension qui viennent directement au contact de ladite rampe.

Un tel appareil peut être simultanément utilisé en tant qu'échangeur de chaleur. La demande de brevet français 2634187 décrit ainsi un appareil comportant une spire hélicoïdale vibrante, tel que les échanges de chaleur sont réalisés par contact indirect avec un fluide caloporteur baignant les pas de la spire ou par contact direct avec au moins un gaz circulant à l'intérieur de la spire à co-courant ou à contre-courant par rapport au sens de circulation des particules solides.

La présente invention permet de réaliser le traitement de particules solides catalytiques et/ou adsorbantes s'élevant au sein d'au moins une spire hélicoïdale vibrante de forme sensiblement tubulaire, lesdites particules étant soumises à un profil de température sur la majeure partie de leur trajet et lesdites particules étant mises en contact avec au moins un fluide sur au moins une partie de leur trajet. Ledit fluide est de préférence un gaz réactif dans le cas de particules solides catalytiques.

Le procédé selon l'invention se caractérise par le chauffage d'au moins un pas de la spire par effet joule à une température comprise entre 20 et 1 000 °C. L'effet joule a pour conséquence directe la génération de chaleur dans la masse de la spire. Il permet ainsi d'obtenir une plus grande souplesse pour la maîtrise de la température au coeur de la spire par rapport au chauffage indirect par fluide caloporteur ou au chauffage direct par un gaz, réactif ou non, circulant dans la spire.

Une mise en oeuvre préférée du procédé selon l'invention comprend un refroidissement des particules solides en fin de trajet, c'est-à-dire dans l'extrémité supérieure de la spire. Ce refroidissement est effectué par mise en contact indirect de ladite extrémité avec un fluide caloporteur. Ledit fluide est de préférence de l'eau.

La mise en contact des particules solides avec au moins un fluide sur au moins une partie du trajet desdites particules peut se faire successivement de nombreuses fois le long du trajet desdites particules indépendamment ou non du chauffage d'au moins un pas de la spire par effet joule dans la matière de la spire. Ledit fluide circule à co-courant ou à contre courant par rapport à la circulation des particules solides. Toute mise en contact se fait sur au moins une partie du trajet, c'est-à-dire sur au moins un pas de la spire. De préférence se produisent de 2 à 10 mises en contact successives le long du trajet des particules solides et de manière encore plus préférée se produisent 3 à 4 mises en contact successives le long dudit trajet.

Le procédé selon l'invention comprend l'utilisation d'au moins une spire hélicoïdale vibrante de forme sensiblement tubulaire. Ladite spire métallique comporte au moins deux pas et peut être obtenue par exemple par la mise en forme d'un tube métallique selon une hélice autour d'un axe sensiblement vertical. Un fût central permet de rigidifier et de soutenir l'hélice formée par la spire. La spire est isolée électriquement du fût central par le système de fixation.

Un transformateur alimente la spire en courant à basse tension permettant de chauffer directement par effet joule la masse métallique du tube à une température comprise entre 20 et 1 000 °C. La mise en oeuvre d'un tel système de chauffage nécessite généralement de nombreux points de piquage électrique le long de la spire. La tension est suffisante pour permettre de dégager la puissance voulue et en général basse pour des raisons de sécurité, par exemple inférieure à 50 V.

Les vibrations peuvent être produites par au moins un système placé à tout niveau adéquat, par exemple à la base ou au sommet du fût ou encore positionné autour de la spire. Parmi les systèmes que l'on peut utiliser se trouvent les systèmes suivants : les moteurs à balourds, les vibrants électromagnétiques (excités par un cycle variable, avec création d'impulsions) et les excitations à balourds. De préférence, les vibrations sont produites par une table servant de support au fût central et actionnée par deux moteurs à balourds.

Les particules solides transformées par le procédé selon l'invention ont une granulométrie comprise entre 0,1 µm (micromètre) et 10 cm de préférence comprise entre 1 µm et 1 cm. Lesdites particules sont de préférence des billes, des extrudés ou des pastilles. Elles sont utilisées pour l'une au moins des propriétés suivantes: l'adsorption, la catalyse. Ce sont de préférence des particules solides catalytiques.

L'appareil selon l'invention comprend :
un tube d'au moins une spire comportant au moins deux pas s'enroulant hélicoïdalement autour d'un axe vertical et d'un fût central. Le tube est en métal, de préférence en acier. Ladite spire a une longueur développée d'au plus 200 m et la hauteur de l'hélice formée par ladite spire est généralement d'au plus 20 m. L'angle de montée de la spire qui mesure l'inclinaison de la spire par rapport à l'horizontale est compris entre 1 et 10 °, de préférence entre 1 et 5 ° et de manière encore plus préférée entre 1 et 4 °. La section transversale de la spire est de préférence sensiblement circulaire auquel cas la spire est un tube. Ledit tube a généralement un diamètre compris entre 10 et 300 mm. Dans le cas d'un appareil préféré selon l'invention pour lequel la spire est un tube, le choix du diamètre dudit tube est lié aux différents autres paramètres du système parmi lesquels le débit massique horaire, le temps de séjour dans la spire des particules solides et dans le cas du système de vibrations préféré selon l'invention, la puissance des moteurs à balourds ;
au moins une conduite latérale d'introduction des particules solides s'ouvrant sur l'extrémité inférieure de la spire et au moins une conduite latérale de soutirage desdites particules s'ouvrant sur l'extrémité supérieure de la spire ;
au moins un piquage électrique de courant à basse tension permettant le chauffage d'au moins un pas de spire par effet joule, à une température comprise entre 20 et 1 000 °C. L'efficacité du chauffage est mesurée par le coefficient global de transfert de chaleur entre le tube chauffant et les particules solides véhiculées. Ledit coefficient augmente quand le coefficient adimensionnel de vibration augmente, mais alors la vitesse d'avancement des particules solides augmente aussi pour une inclinaison des moteurs donnée et donc le temps de séjour desdites particules dans la spire diminue. Le coefficient adimensionnel de vibration est défini comme le rapport de la composante verticale de la vibration imposée à la pesanteur. La puissance électrique doit donc être choisie judicieusement, en tenant compte des paramètres de vibration (dont l'inclinaison des moteurs dans le cas du système de vibration préféré selon l'invention) et de la longueur du tube. Le coefficient de transfert dépend d'autre part de la granulométrie des particules solides. A titre d'exemple, pour un sable de 200 µm (micromètres) avec un coefficient adimensionnel de vibration compris entre 1,2 et 3,5, le coefficient de transfert est compris entre 50 et 200 W/m2°C.
au moins un ensemble de deux conduites comportant une conduite latérale d'introduction d'au moins un fluide et une conduite latérale de soutirage d'au moins ledit fluide, de telle sorte que ledit fluide circule dans au moins un pas de la spire. Le nombre de conduites de ce type est de préférence de 2 à 10 et de manière encore plus préférée il est égal à 3 ou à 4. Le fluide circule à co-courant ou à contre courant par rapport au sens de circulation des particules solides. Il est également possible de récupérer par la conduite latérale de soutirage dudit ensemble de deux conduites le ou les gaz dégagé (s) par effet de la chaleur ou par une réaction. La vitesse d'un courant de fluide (fluide introduit ou gaz dégagé) est choisie en fonction des particules solides véhiculés. Il faut tenir compte de ce courant car il accélère ou freine les particules selon son sens de circulation surtout pour de petites particules. En particulier, un courant de fluide circulant à contre courant risque de bloquer l'appareil. Par exemple, pour des particules de sable de granulométrie égale à 1 600 µm, la vitesse de courant réactif gazeux circulant à contre courant doit être inférieure à 2 m/s pour permettre un bon fonctionnement de l'appareil.
. des moyens pour imprimer des vibrations à l'ensemble fût-spire, tels que : la constante adimensionnelle d'accélération, rapport de la composante verticale de l'accélération à l'accélération de la pesanteur, est comprise entre 0 et 4, de préférence entre 1, 2 et 3,5, et de manière encore plus préférée entre 1 et 3, tels que la vitesse d'avancement des particules est comprise entre 0,05 et 0,5 m/s, de préférence entre 0,1 et 0,4 m/s et de manière encore plus préférée entre 0,1 et 0,3 m/s et tels que le débit massique horaire de particules est compris entre 1 kg/h et 50 tonnes/h, de préférence entre 5 kg/h et 10 tonnes/h.

Dans le cas de la mise en oeuvre préférée selon l'invention, les vibrations sont produites par une table servant de support au fût central et actionnée par deux moteurs à balourds. Dans ce cas, les particules solides véhiculées à l'intérieur de la spire avancent à une vitesse proportionnelle à la constante adimensionnelle d'accélération, pour une inclinaison de moteurs et un angle de montée donnés. La constante adimensionnelle d'accélération dépend de l'écartement des balourds et de leur vitesse de rotation pour le système donné. Pour une variation de ladite constante comprise entre 1,2 et 3,5 la vitesse d'avancement des particules est typiquement comprise entre 0,1 et 0,3 m/s. Ainsi ladite vitesse est facilement réglable en agissant sur l'écartement des balourds, l'inclinaison des moteurs ou la vitesse de rotation des moteurs. Quant au débit volumique horaire des particules, il dépend de la constante adimensionnelle de vibration, mais aussi du diamètre du tube formant la spire. La puissance des moteurs et l'encombrement au sein du tube sont des facteurs limitants. Ainsi un tube de référence DN 40 (1 1/4") véhicule au maximum 700 kg/h de sable dont les particules ont un diamètre de 1,6 mm. D'autre part, l'inclinaison des moteurs ne doit généralement pas dépasser 35° pour faire avancer efficacement les particules solides dans le tube sans engendrer de vibrations excessives.

Il est possible que la partie du trajet des particules solides où au moins un pas de la spire est chauffé, coïncide au moins partiellement avec la partie de trajet où au moins un fluide circule dans la spire. Mais il est également possible dans le cadre de la présente invention que lesdites parties de trajet ne coïncident pas du tout.

Une autre mise en oeuvre particulière dudit appareil comprend aussi une mise en contact de l'extrémité supérieure de la spire, au dessous du soutirage des particules solides, avec un fluide caloporteur de façon à refroidir lesdites particules. De préférence, ledit fluide est de l'eau. Ce système de refroidissement peut être celui décrit dans le brevet français 2634187 dans le cas d'un échange de chaleur par contact indirect avec un fluide caloporteur.

Le procédé de la présente invention et l'appareil qui le met en oeuvre selon l'invention sont utilisables pour toute transformation de catalyseur qui comprend un traitement de particules solides catalytiques en présence d'au moins un gaz réactif et pour tout traitement d'adsorption qui comprend un traitement de particules solides en présence d'au moins un fluide. Il est possible de mettre en oeuvre successivement plusieurs appareils selon l'invention pour une utilisation donnée sans sortir du cadre de la présente invention. Quelques exemples de traitements de catalyseurs sont le strippage, la régénération ou l'oxydation, la présulfuration, la sulfuration, la réduction, la chloration ou toute combinaison de ces traitements ou tout autre traitement nécessitant une atmosphère contrôlée.

Les exemples et les figures décrits ci-après illustrent rinvention sans toutefois en limiter la portée.

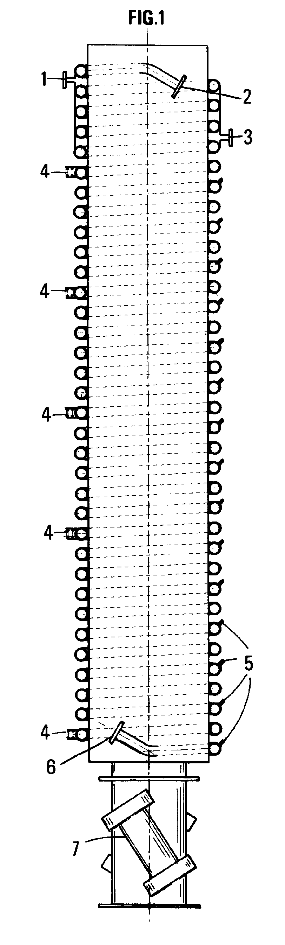

La figure 1 permet d'illustrer l'exemple 1 décrit ci-après. Il s'agit d'une utilisation pour le strippage d'un catalyseur. La spire est disposée sur une table vibrante avec deux moteurs à balourds (7). L'entrée des particules solides catalytiques se fait par la conduite (6) et leur sortie se fait par la conduite (2). Les quatre derniers pas de la spire, à l'extrémité supérieure de celle-ci sont baignés par un fluide caloporteur qui est de l'eau, en vue de refroidir les particules solides catalytiques avant leur sortie de la spire. L'eau entre par la conduite (1) et ressort par la conduite (3). De nombreux points (4) de piquage électrique par du courant à basse tension sont disposés le long de spire. Enfin, les entrées et sorties d'azote qui sert au stripage se font par les conduites (5).

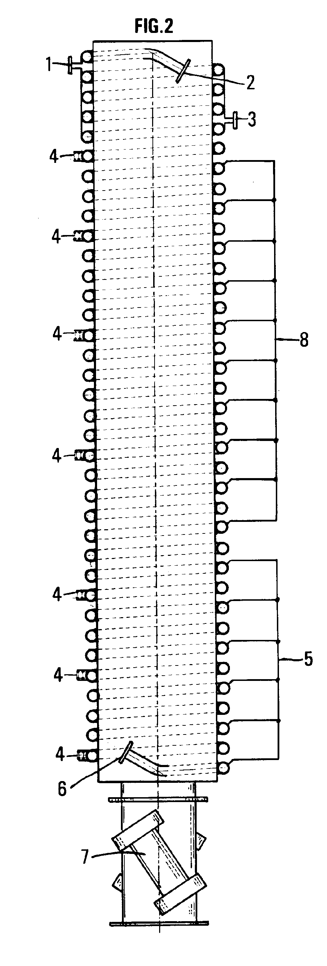

La figure 2 illustre l'exemple 2 décrit ci-après, dans le cas d'un strippage puis d'une régénération de particules solides catalytiques. Les références (1) à (7) indiquées pour la figure 1 se retrouvent dans la figure 2. De plus, la régénération est effectuée grâce à un contact desdites particules avec l'air, qui sort et entre dans la spire par les conduites (8).

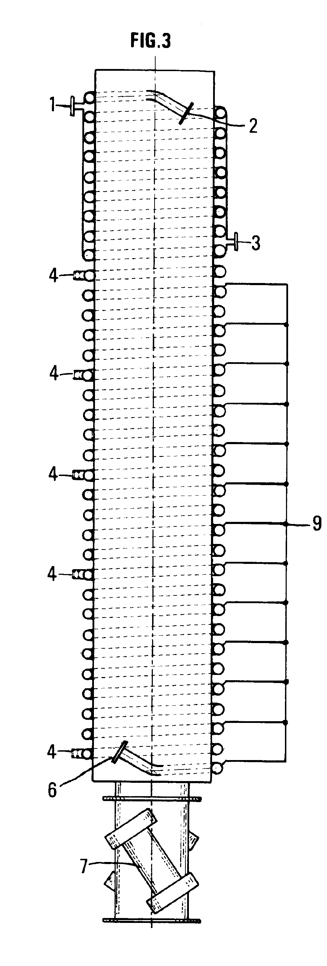

La figure 3 illustre les exemples 4 et 5 décrits ci-après dans le cas d'une présulfuration ou d'une sulfuration de particules solides catalytiques. Les références (1) à (4), (6) et (7) sont celles indiquées pour les figures 1 et 2. Les entrées et sorties des gaz se font par les conduites (9).

### Exemple 1

On procède à un traitement de strippage sous azote d'un catalyseur d'hydrotraitement imbibé d'hydrocarbures. Le catalyseur est de type cobalt molybdène déposé sur alumine contenant:

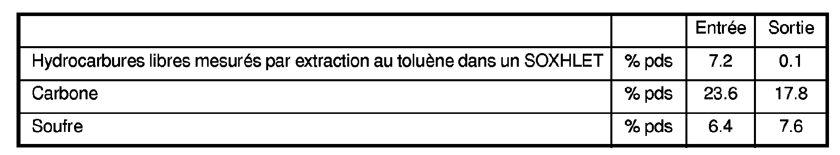

L'appareil de chauffage comprend une zone de montée en température avec un temps de résidence de 3 minutes et une longueur de spire de 10 mètres, une zone de palier avec un temps de résidence de 15 minutes, une longueur de spire de 60 mètres et une température de 280°C, et une zone de refroidissement avec un temps de résidence de 4 minutes et une longueur de spire de 15 mètres. Le débit en azote est de 30m³/h et en catalyseur de 150kg/h.

### Exemple 2

Le catalyseur de l'exemple 1 subit un traitement associé de strippage et de régénération, qui donne les résultats suivants :

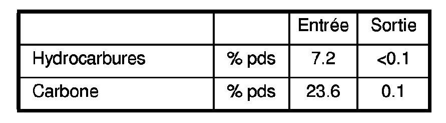

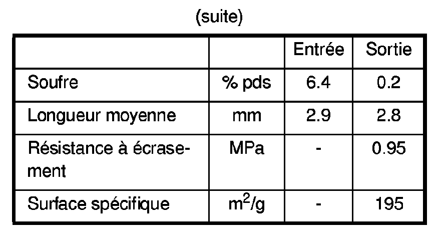

Ce traitement est réalisé dans un contacteur gaz solide vibré aux conditions suivantes:

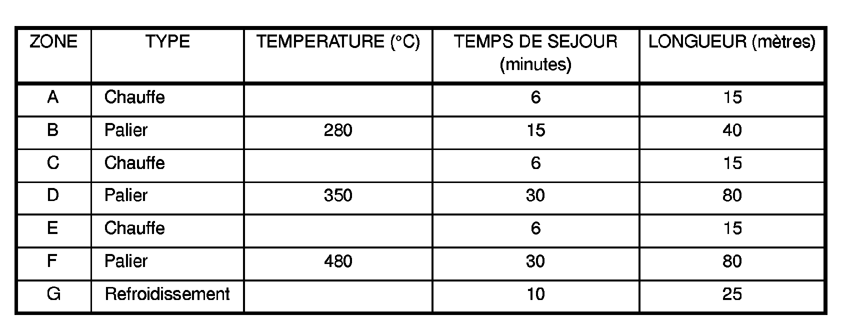

Les zones A et B sont sous débit d'azote (15m³/h). Les zones C à G sont sous débit d'air/oxygène (300m³/h).

### Exemple 3 (Comparatif)

Le même catalyseur que celui utilisé à l'exemple 2 est traité dans un procédé conventionnel de stripage et régénération. Ceci consiste en 3 passages dans un même four rotatif de type four à louvres: un premier passage à une température de 280°C avec un débit d'azote de 20m³1h, un deuxième passage à 350°C et un troisième passage à 480°C avec un débit d'air de 1000m³/h, ce qui donne les résultats suivants:

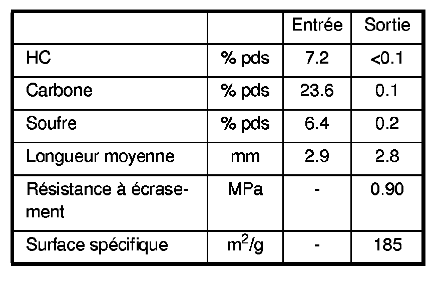

La résistance à l'écrasement est plus faible, ce qui fait préférer la technique décrite dans l'exemple 2.

### Exemple 4

On procède à un traitement de présulfuration par chimisorption de Soufre sur un catalyseur d'hydrotraitement, de type HR 306 de PROCATALYSE, de couleur bleue, contenant 3% CoO, 14% Mo0₃, le reste étant de l'alumine.

1000 kg de ce catalyseur sont imprégnés par un mélange de 187 litres de TPS 37, produit fourni par ATOCHEM et contenant 37% poids de Soufre, et 360 litres de White Spirit dans un tonneau rotatif. Le catalyseur imprégné est admis dans un four à tube rotatif vibré avec un débit d'azote de 1 Om³/h à une température de 240°C. Le débit solide est 40kg/h et la longueur de spire de chauffage est de 60 mètres et de refroidissement dégazage de 25 mètres. A la sortie, le catalyseur d'une couleur gris foncé contient 6.1% de Soufre et la perte au feu à 500°C est de 12.9%.

Le composé ainsi préparé est constitué d'oxydes de Molybdène et de Cobalt sur lesquels le Soufre a réagi pour former des espèces apparentées à des oxysulfures ou des oxydes supportant des espèces Soufre chimisorbées.

### Exemple 5

On procède à un traitement de sulfuration du catalyseur solide de l'exemple 3, dans un four vibrant par un mélange Hydrogène/Azote dans des proportions 95/5 à un débit de 5m³/h et à une température de 320°C avec un débit de catalyseur de 20kg/h. La transformation des oxydes ou oxysulfures de métaux en sulfures s'effectue selon la réaction suivante :

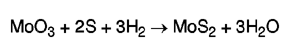

Ceci donne un catalyseur de couleur noire avec une teneur en Soufre de 5.7%, une perte au feu de 5.8%.

Ce catalyseur est soumis à un test de chimisorption d'oxygène, technique qui permet de doser les sites actifs de ces phases sulfures pour les réactions d'hydrodésulfuration. La valeur de la D.O.C. (Dynamic Oxygen chimisorption) est de 1.8 10-⁴mole/g catalyseur.

### Exemple 6

Cet exemple décrit un traitement intégré de présulfuration et de sulfuration à l'hydrogène.

Le catalyseur HR 306 est imprégné par du TPS 37 conformément à l'exemple 4 puis traité dans un four à tube enroulé vibré de dimension analogue à celui de l'exemple 2, selon les conditions suivantes:

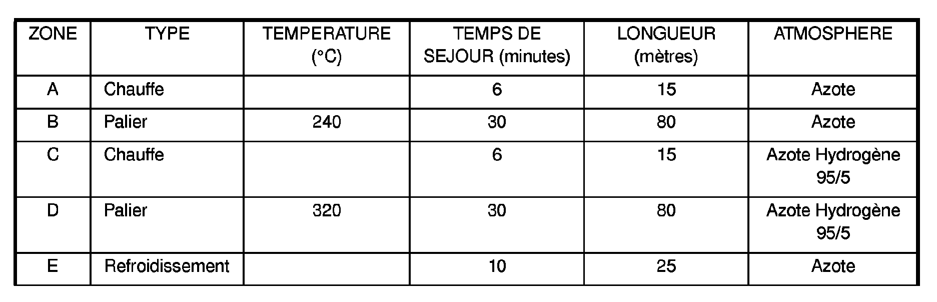

La valeur de la DOC est de 1,9 10-4mole/g catalyseur, ce qui est supérieur à ce qui était obtenu à l'exemple 5. Le traitement intégré comme décrit dans cet exemple est donc meilleur que les traitements séquentiels des exemples 4 et 5.

## Revendications

1. Procédé de traitement de particules solides de granulométrie comprise entre 0,1 µm et 10 cm qui consiste à faire monter lesdites particules dans au moins une spire hélicoïdale vibrante métallique, de forme sensiblement tubulaire et comportant au moins deux pas, lesdites particules étant soumises à un profil de température sur la majeure partie de leur trajet dans ladite spire et lesdites particules étant mises en contact avec au moins un fluide sur au moins une partie de leur trajet, ledit procédé étant caractérisé par le chauffage direct d'au moins un pas de la spire par effet joue à une température comprise entre 20 et 1 000 °C.

2. Procédé selon la revendication 1 dans lequel, en fin de trajet, les particules sont refroidies par un fluide caloporteur avec lequel est en contact l'extrémité supérieure de ladite spire.

3. Procédé selon l'une des revendications 1 et 2 dans lequel le nombre de mises en contact avec au moins un fluide varie de 2 à 10.

4. Procédé selon l'une des revendications 1 à 3 dans lequel lesdites particules sont des particules solides catalytiques et ledit fluide est un gaz réactif.

5. Appareil de traitement de particules solides de taille comprise entre 0,1 µm et 10 cm ledit appareil comprenant :
au moins une spire métallique de forme sensiblement circulaire et comportant au moins deux pas, s'enroulant hélicoïdalement autour d'un axe vertical et d'un fût central, ladite spire ayant un diamètre compris entre 10 et 300 mm, une longueur développée d'au plus 200 m, la hauteur de l'hélice formée par ladite spire étant d'au plus 20 m et l'angle de montée de la spire étant compris entre 1 et 10°,
au moins une conduite latérale d'introduction desdites particules et au moins une conduite latérale de soutirage desdites particules,
au moins un piquage électrique de courant à basse tension permettant le chauffage direct d'au moins un pas de la spire par effet joue à une température comprise entre 20 et 1 000 °C,
au moins un ensemble de deux conduites comportant une conduite latérale d'introduction d'au moins un fluide et une conduite latérale de soutirage d'au moins ledit fluide de telle sorte que ledit fluide circule dans au moins un pas de la spire,
des moyens pour imprimer des vibrations à l'ensemble fût-spire, tels que la constante adimensionnelle d'accélération est comprise entre 0 et 4, la vitesse d'avancement des particules est comprise entre 0,05 et 0,5 m/s et le débit massique horaire des particules est compris entre 1 kg/h et 50 tonnes/h.

6. Appareil selon la revendication 5 dans lequel les moyens pour imprimer des vibrations à l'ensemble fût-spire consistent en une table vibrante actionnée par deux moteurs à balourds.

7. Appareil selon l'une des revendications 5 ou 6 dans lequel la conduite latérale d'introduction desdites particules solides s'ouvre sur l'extrémité inférieure de la spire et la conduite latérale de soutirage desdites particules s'ouvre sur l'extrémité supérieure de la spire.

8. Appareil selon l'une des revendications 5 à 7 comportant des moyens de mise en contact de l'extrémité supérieure de la spire avec un fluide caloporteur permettant le refroidissement de ladite extrémité.

9. Appareil selon l'une des revendications 5 à 8 dans lequel la spire a une section transversale sensiblement circulaire.

10. Appareil selon l'une des revendications 5 à 9 dans lequel l'angle de montée de la spire est compris entre 1 et 5 °, les particules ont une granulométrie comprise entre 1 µm et 1 cm, la constante adimensionnelle d'accélération est comprise entre 1,2 et 3,5, la vitesse d'avancement des particules est comprise entre 0,1 et 0,4 m/s, le débit massique horaire des particules est compris entre 5 kg/h et 10 tonnes/h et le nombre desdits ensembles de deux conduites est de 2 à 10.

11. Appareil selon l'une des revendications 5 à 10 dans lequel l'angle de montée de la spire est compris entre 1 et 4 °, la constante adimensionnelle d'accélération est comprise entre 1 et 3, la vitesse d'avancement des particules est comprise entre 0,1 et 0,3 m/s et le nombre desdits ensembles de deux conduites est égal à 3 ou à 4.

## Claims

1. Process for the treatment of solid particles of grain size between 0.1µm and 10cm consisting of making the said particles rise in at least one substantially tubular, metal, vibrating, helical coil having at least two turns, said particles being subjected to a temperature profile over most of their path in said coil and said particles are contacted with at least one fluid over at least part of their path, said process being characterized by the direct heating of at least one turn of the coil by the Joule effect to a temperature between 20 and 1000°C.

2. Process according to claim 1, wherein, at the end of the path, the particles are cooled by a heat transfer fluid with which is in contact the upper end of the coil.

3. Process according to either of the claims 1 and 2, wherein the number of contacting operations with at least one fluid varies between 2 and 10.

4. Process according to any one of the claims 1 to 3, wherein said particles are solid catalytic particles and said fluid is a reactive gas.

5. Apparatus for the treatment of solid particles with a size between 0.1 um and 10cm, said apparatus comprising:
at least one substantially circular metal coil having at least two turns, helically wound around a vertical axis and a central shaft, said coil having a diameter between 10 and 300mm, a developed length of at most 200m, the height of the helix formed by said coil being at most 20m and the angle of rise of the coil being 1 and 10°,
at least one lateral pipe for the introduction of said particles and at least one lateral pipe for drawing off the said particles,
at least one low voltage current tapping point permitting the direct heating of at least one turn of the coil by the Joule effect at a temperature between 20 and 1000°C,
at least one assembly of two pipes having a lateral pipe for the introduction of at least one fluid and a lateral pipe for drawing off at least the said fluid in such a way that said fluid flows in at least one turn of the coil,
means for imparting vibrations on the shaft - coil assembly, so that the dimensionless acceleration constant is between 0 and 4, the particle advance speed is between 0.05 and 0.5m/s and the mass hourly particle flow rate is between 1 kg/h and 50 tonnes/h.

6. Apparatus according to claim 5, wherein the means for imparting vibrations to the shaft - coil assembly consist of a vibrating table actuated by two unbalanced motors.

7. Apparatus according to either of the claims 5 and 6, wherein the lateral pipe for the introduction of the solid particles opens onto the lower end of the coil and the lateral pipe for drawing off said particles opens onto the upper end of said coil.

8. Apparatus according to any one of the claims 5 to 7, containing means for contacting the upper end of said coil with a heat transfer fluid, allowing the cooling of said particles.

9. Apparatus according to any one of the claims 5 to 8, wherein the coil has a substantially circular cross-section.

10. Apparatus according to any one of the claims 5 to 9, wherein the rise angle of the coil is between 1 and 5%, the particles have a grain size between 1µm and 1 cm, the dimensionless acceleration constant is between 1.2 and 3.5, the particle advance speed is between 0.1 and 0.4m/s, the mass hourly particle flow rate is between 5kg/h and 10 tonnes/h and the number of said assemblies of two pipes is between 2 and 10.

11. Apparatus according to any one of the claims 5 to 10, wherein the coil rise angle is between 1 and 4°, the dimensionless acceleration constant is between 1 and 3, the particle advance speed is between 0.1 and 0.3m/s and the number of assemblies of two pipes is 3 or 4.

## Patentansprüche

1. Verfahren zur Behandlung fester Partikel mit einer Körnung zwischen 0,1 µm und 10 cm, das darin besteht, die besagten Partikel innerhalb von mindestens einer aus Metall hergestellten Spirale eines Vibratorgerätes aufsteigen zu lassen, die annähernd rohrförmig ist und mindestens zwei Windungen aufweist, wobei die besagten Partikel einem Temperaturprofil über den größten Teil ihrer Durchlaufstrecke innerhalb der besagten Spirale ausgesetzt sind und in Kontakt mit mindestens einem flüssigen Mittel an mindestens einer Stelle dieser Durchlaufstrecke gebracht werden, wobei das besagte Verfahren dadurch gekennzeichnet ist, daß mindestens eine Spiralwindung durch Stromwärme auf eine Temperatur von 20 bis 1 000° C direkt beheizt wird.

2. Verfahren nach Anspruch 1, in dem die Partikel am Ende der Durchlaufstrecke durch ein flüssiges Mittel mit Wärmeübertragungseigenschaften, mit dem das obere Ende der Spirale in Berührung kommt, gekühlt werden.

3. Verfahren nach einem der Ansprüche 1 und 2, in dem die Zahl der Kontaktstellen mit mindestens einem wärmeübertragenden flüssigen Mittel zwischen 2 und 10 liegt.

4. Verfahren nach einem der Ansprüche 1 bis 3, in dem die besagten Partikel feste Katalysatorpartikel sind und das besagte flüssige Mittel ein reaktives Gas darstellt.

5. Gerät zur Behandlung von Partikeln mit einer Körnung von 0,1 µm bis 10 cm, wobei das besagte Gerät aus folgenden Teilen besteht:
mindestens einer Metallspirale, die annähernd kreisförmig ist und mindestens zwei Windungen aufweist, die um eine senkrechte Achse und einen zentralen Schaft angeordnet ist, wobei die besagte Spirale einen Durchmesser von 10 bis 300 mm und eine Gesamtlänge von maximal 200 m hat, wobei die Höhe der durch die besagte Spirale gezeichneten Helix 20 m nicht übersteigt und der Steigungswinkel der Spirale zwischen 1 und 10° liegt,
mindestens einer seitlichen Leitung für die Zuführung der besagten Partikel und mindestens einer seitlichen Leitung zur Entnahme der besagten Partikel,
mindestens einer Stromeinspeisungsstelle für Niederspannungsstrom zum direkten Heizen von mindestens einer Spiralwindung durch Widerstandswärme auf eine Temperatur von 20 bis 1 000° C,
mindestens einer Einheit aus zwei Leitungen, wobei eine seitliche Leitung für die Zufuhr von mindestens einem flüssigen Mittel und eine seitliche Leitung für die Entnahme von mindestens dem besagten flüssigen Mittel dient, so daß das besagte flüssige Mittel durch mindestens eine Spiralwindung strömt,
Mitteln, um in der Schaft-Spiraleinheit Schwingungen zu erzeugen, so daß die adimensionale Beschleunigungskonstante zwischen 0 und 4, die Fließgeschwindigkeit der Partikel zwischen 0,05 und 0,5 m/s und der Mengendurchfluß zwischen 1 kg/h und 50 Tonnen/h liegen.

6. Gerät nach Anspruch 5, in dem die Mittel für die Erzeugung der Schwingungen in der Schaft-Spiraleinheit aus einem Schwingungstisch bestehen, der von zwei Unwuchtmotoren bewegt wird.

7. Gerät nach einem der Ansprüche 5 oder 6, in dem die seitliche Leitung für die Zufuhr der besagten festen Partikel in das untere Spiralende und die seitliche Leitung für die Entnahme der besagten Partikel in das obere Spiralende mündet.

8. Gerät nach einem der Ansprüche 5 bis 7, das Mittel enthält, um das obere Spiralende mit einem wärmeübertragenden flüssigen Mittel zur Kühlung des besagten Spiralendes in Berührung zu bringen.

9. Gerät nach einem der Ansprüche 5 bis 8, in dem die Spirale einen annähernd kreisförmigen Querschnitt aufweist.

10. Gerät nach einem der Ansprüche 5 bis 9, in dem der Steigungswinkel der Spirale zwischen 1 und 5° beträgt, wobei die Partikel eine Körnung von 1 αm bis 1 cm aufweisen, die adimensionale Beschleunigungskonstante zwischen 1,2 und 3,5 liegt, die Fließgeschwindigkeit der Partikel sich zwischen 0,1 und 0,4 m/s bewegt, der Partikelmengendurchfluß pro Stunde zwischen 5 kg/h und 10 Tonnen/h beträgt und die Zahl der besagten Einheiten aus je zwei Leitungen von 2 bis 10 variiert.

11. Gerät nach einem der Ansprüche 5 bis 10, in dem der Steigungswinkel der Spirale von 1 bis 4° beträgt, die adimensionale Beschleunigungskonstante zwischen 1 und 3, die Fließgeschwindigkeit der Partikel zwischen 0,1 und 0,3 m/s liegt und die Zahl der besagten Einheiten aus je zwei Leitungen 3 oder 4 ist.
